# EUROPÄISCHE PATENTSCHRIFT

(11) **EP 0 887 399 B1**
(45) Veröffentlichungstag und Bekanntmachung des Hinweises auf die Patenterteilung: **28.11.2001**
(21) Anmeldenummer: 98110153.8
(22) Anmeldetag: 04.06.1998
(51) Int. Cl.: C09K 19/40, C08G 77/26, C08G 77/388, C08G 77/48, C07C 69/773, C07C 69/78

(54) **Organosiloxane mit niedriger Glastemperatur**
Silicones having a low glass transition temperature
Organosiloxanes à température basse de transition vitreuse

(30) Priorität: 19.06.1997 DE 19726047
(43) Veröffentlichungstag der Anmeldung: 30.12.1998
(73) Patentinhaber: Consortium für elektrochemische Industrie GmbH, 81379 München (DE)
(72) Erfinder: Häberle, Norman, Dr., 80689 München (DE); Kreuzer, Franz-Heinrich, Dr., 82152 Martinsried (DE); Küpfer, Jürgen, Dr., 80686 München (DE)
(74) Vertreter: Fritz, Helmut, Dr.

(56) Entgegenhaltungen:
- EP-A- 0 358 208
- EP-A- 0 711 780
- EP-A- 0 724 005
- DE-A- 4 240 743

## Beschreibung

Die Erfindung betrifft vernetzbare, vorzugsweise flüssigkristalline Organosiloxane (LC-Organosiloxane), die nach der Vernetzung niedrige Glastemperaturen und gleichzeitig geringe unvernetzte, extrahierbare Anteile aufweisen, Verfahren zu deren Herstellung und Vernetzung sowie deren Verwendung.

Die Herstellung und Verwendung vernetzbarer LC-Siloxane ist beispielhaft aus US-A-5,211,877, EP-A-711 780 und DE-A-42 40 743 bekannt. Diese Verbindungen enthalten primär eigenschaftsbestimmende Mesogene und in wählbaren Anteilen Molekülbestandteile, die einerseits zu den mesogenen Eigenschaften der LC-Organosiloxane beitragen, andererseits aber durch anhängende, polymerisierbare Gruppen befähigt sind, bestimmte, für die so hergestellten LC-Silicone charakteristische physikalische und chemische Eigenschaften durch dreidimensionale Vernetzung irreversibel zu fixieren. In Abhängigkeit von Art und Menge der Zumischung von weiteren, copolymerisierbaren Mesogenen und sonstigen Bestandteilen bei der Vernetzung können so beispielsweise Pigmente hergestellt werden, deren Farbe auf der cholesterischen Phase eines copolymerisierten, optisch aktiven Mesogens und/oder auf dem Zusatz beigemischter Mesogene beruht.

Beim Einsatz der in US-A-5,211,877, EP-A-711 780 und DE-A-42 40 743 genannten LC-Organosiloxane als LC-Pigmente ergeben diese bei Verarbeitungstemperaturen von 130°, beispielweise eine übliche Verarbeitungstemperatur bei der Erstlackierung von Stahlblechen und andererseits bei einer Verarbeitung bei 80 °C, beispielsweise eine übliche Verarbeitungstemperatur bei Reparaturlackierungen, unterschiedliche Farben. Dieses unterschiedliche Verhalten wird durch die Glastemperatur des Pigments im Zusammenhang mit der Quellung des Pigments bei der Herstellung von Lacken und dem Entquellvorgang beim Trocknen dieser Lacke bewirkt, d. h. durch das Einwirken von Lösungsmitteln auf das Pigment. Durch den Quellvorgang und das dabei gegebenenfalls stattfindende Herauslösen unvernetzter Bestandteile aus dem Pigment wird die Struktur des Pigments verändert. Das Erwärmen des getrockneten Lackfilms über die Glastemperatur des Pigments führt zu einer ausgeprägten Relaxation,d.h. die Ganghöhe der Helix des cholesterischen Flüssigkristalls wird verkürzt und damit die Reflexionswellenlänge des Pigments zu kürzeren Wellenlängen hin verschoben; es tritt eine Blauverschiebung ein. Liegt nun die Glastemperatur des Pigments über der niedrigeren Verarbeitungstemperatur des Lacks, so tritt die Relaxation nicht vollständig ein und es resultiert eine veränderte Farbe gegenüber Lackfilmen, die bei Temperaturen oberhalb der Glastemperatur hergestellt wurden und somit in ihrer Farbe dem vollständig relaxierten Material entsprechen.

In EP-A-724 005 ist die Stabilisierung der Reflexionswellenlängen bei verschiedenen Verarbeitungstemperaturen von LC-Organosiloxanen als LC-Pigmente beschrieben. Es werden von farbneutrale, zumindest zwei vernetzbare Doppelbindungen enthaltende Verbindungen zugesetzt, insbesondere mit dem Pigment in keinem chemischen Zusammenhang stehende Mehrfach-Acrylate/Methacrylate. Diese erzeugen eine Art Matrix, in der alles übrige fixiert wird, um so thermisch bedingten Veränderungen entgegenzuwirken.

Aufgabe der Erfindung war es deshalb, vernetzbare LC-Organosiloxane zur Verfügung zu stellen, die nach der Vernetzung Glastemperaturen von höchstens 80 °C und geringe unvernetzte, extrahierbare Anteile aufweisen.

Gegenstand der Erfindung sind Organosiloxane, die eine Gruppe der allgemeinen Formel 1

- (CH₂)ₚ-(O)_{q}-C₆H₄-Z-(COO)ₛ-[A-M]ₜ-E-(CH₂-CH₂-O)ₐ-VN (1)

und gegebenenfalls eine Gruppe der allgemeinen Formel 2

-(CH₂)ₘ-(O)ₙ-(A)ₜ-Q-X (2)

aufweisen, wobei
- **X**: einen Cholesteryl-, Dihydrocholesteryl-, Doristeryl-, Isosorbidyl-, Isomannidyl- oder Cholsäurerest oder einen unsubstituierten oder substituierten Rest, der ausgewählt wird aus 1,4-Phenyl-, 4,4'-Biphenylyl-, 1,4-Cyclohexylen-, 4,4'-Bicylohexylen-, 4,4'-Cyclohexylenphenylen-, 2,5-substituierten 1,3-Dioxanyl- und Pyrimidinylrest, wobei der Substituent ein C₁- bis C₅-Alkoxyrest, C₁- bis C₅-Alkylrest, Cyanorest, Chlorrest oder Nitrorest sein kann,
- **Q**: eine -COO-Gruppe oder eine -OOC-Gruppe oder eine -O-Gruppe oder eine chemische Bindung oder eine -O-(C=O)-O-Gruppe,
- **Z**: eine chemische Bindung oder eine Gruppe -CH₂- oder -CH₂-CH₂-,
- **A**: einen 1,4-Phenylen-, 1,5-Naphthylen-, 2,6- Naphthylen-, 2,7-Naphthylen-, 4,4'-Biphenylen-, 1,4-Cyclohexylen-, 4,4'-Bicylohexylen-, 4,4'-Cyclohexylenphenylen-, 2,5-(1,3-Dioxanylen)- oder einen Pyrimidinylenrest,
- **M**: eine chemische Bindung, ein Sauerstoffatom oder eine Gruppe -COO-, -OCO- oder -OOC-(CH₂)ᵥ-COOCH₂CH₂-,
- **VN**: eine Gruppe -O-C(O)-CH=CH₂, -O-C(O)-C(CH₃)=CH₂, -(CH₂)ᵤ-OCH=CH₂, -CH=CH₂ oder eine Oxiranylgruppe,
- **E**: eine Gruppe (CH₂)ᵣ, wobei einzelne CH₂-Gruppen durch Sauerstoff ersetzt sein können,
- **m und p**: jeweils ganze Zahlen von 3, bis 6,
- **r**: eine ganze Zahl von 1 bis 10,
- **n, q und s**: jeweils die Werte 0 oder 1,
- **t**: den Wert 0 oder eine ganze Zahl von 1 bis 3,
- **u und v**: jeweils eine ganze Zahl von 2 bis 8 und
- **a**: den Wert 0 oder eine ganze Zahl von 1 bis 6 bedeuten, mit der Maßgabe, daß in den Gruppen der allgemeinen Formeln 1 und 2 keine Sauerstoffatome direkt aneinander gebunden sind.

Vorzugsweise sind die Organosiloxane flüssigkristallin.

Vorzugsweise beträgt die Zahl der Siliciumatome in den Organosiloxanen 2 bis 70, insbesondere 3 bis 40.

Vorzugsweise sind die Organosiloxane aus Einheiten der allgemeinen Formel 3

[R_{b}Mes_{c}SiO_{(4-b-c)/2}] (3)

aufgebaut, worin
- **R**: C₁- bis C₄-Alkylreste,
- **Mes**: eine Gruppe der allgemeinen Formeln 1 oder 2,
- b: die Werte 0, 1 oder 2 und
- **c**: die Werte 0 oder 1 bedeuten.

Vorzugsweise beträgt der durchschnittliche Wert von c mindestens 0,5, insbesondere mindestens 0,8.

Vorzugsweise sind die Organosiloxane geradlinig offenkettig, cyclisch oder Silsesquioxane.

Besonders bevorzugt sind offenkettige flüssigkristalline Organosiloxane aus 2 bis 60, insbesondere 3 bis 40 Einheiten der allgemeinen Formel 3 und cyclische flüssigkristalline Organosiloxane aus 4 bis 7 Einheiten der allgemeinen Formel 3.

In den allgemeinen Formeln 1 und 2 bedeutet vorzugsweise **X** einen Cholesterylrest, einen Doristerylrest, einen unsubstituierten oder in 4-Stellung substituierten Phenylrest, dessen Substituent C₁- bis C₅-Alkoxyrest, C₁- bis C₅-Alkylreste, ein Cyanorest oder ein Nitrorest sein können.

Vorzugsweise bedeutet **Z** eine chemische Bindung.

Vorzugsweise bedeutet **M** eine chemische Bindung, ein Sauerstoffatom oder eine Gruppe -COO.

Vorzugsweise bedeutet **E** eine Gruppe (CH₂)ᵣ, wobei keine CH₂-Gruppen durch Sauerstoff ersetzt sein können.

Vorzugsweise bedeutet **r** den Wert 0 oder eine ganze Zahl von 1 bis 7.

Vorzugsweise bedeutet **t** den Wert 1 oder 2.

Vorzugsweise bedeutet **a** den Wert 0 oder eine ganze Zahl von 1 bis 4.

Die flüssigkristallinen Organosiloxane weisen Vernetzerbausteine der allgemeinen Formel 1 auf, die auf Grund ihrer Struktur zu Organosiloxanmassen mit niedrigeren Glastemperaturen führen, insbesondere zu LC-Pigmenten. Diese LC-Pigmente relaxieren bereits bei 80 °C vollständig und weisen deshalb bereits bei stärker unterschiedlichen Verarbeitungstemperaturen, von denen die niedrigere bei mindestens 80 °C liegt, nach der Verarbeitung gleiche Reflexionswellenlängen auf.

Die niedrigen Glastemperaturen der aus den erfindungsgemäßen LC-Siliconen hergestellten Pigmente werden durch einen Gehalt an flexiblen Strukturelementen M, E und/oder (CH₂-CH₂-O)ₐ gemäß der allgemeinen Formel 1 bewirkt. Darüber hinaus können weitere Verbindungen, die mindestens eine, aber auch mehrere, polymerisierbare Gruppen enthalten, den erfindungsgemäßen Organosiloxanen zugemischt werden und gemeinsam mit diesen zu einer unlöslichen LC-Substanz (Pigment) umgesetzt werden. Beispiele für solche zumischbaren Verbindungen sind Vernetzer gemäß der allgemeinen Formel 4,

H₂C=CH-(CH₂)ₚ₋₂-(O)_{q}-C₆H₄-Z-(COO)ₛ-[A-M]ₜ-E-(CH₂-CH₂-O)ₐ-VN (4)

worin
**Z, A, E, M, VN, p, q, s, t** und **a** die für die allgemeine Formel 1 angegebenen Bedeutungen aufweisen, mit der Maßgabe, daß in den Verbindungen der allgemeinen Formel 4 keine Sauerstoffatome direkt aneinander gebunden sind.

Weitere Beispiele für zumischbare Vernetzer sind 4-Allyloxybenzoesäure-(4-methacryloyloxyphenyl)ester, bekannt aus WO 94/09086, Bisacrylate oder Bismethacrylate mesogener Verbindungen der allgemeinen Formel 5

VN-(CH₂)ᵣ-(O-CH₂-CH₂)ₐ-[M-A]ₜ-M-(CH₂-CH₂-O)ₐ-(CH₂)ᵣ-VN (5)

in der **VN, a, r, A, t** und **M** die in den allgemeinen Formeln 1 und 2 angegebenen Bedeutungen aufweisen, die allein oder im Gemisch mit Verbindungen der allgemeinen Formel 4 und/oder nichtmesogenen Bisacrylaten und/oder Bismethacrylaten verwendet werden.

Vorzugsweise bedeuten in der allgemeinen Formel 5
- **p**: die Werte 3 bis 6,
- **a**: den Wert 0, 1 oder 2,
- **M**: ein Sauerstoffatom, eine Carboxylgruppe oder eine Oxycarbonylgruppe
- **A**: einen 1,4-Phenylenrest
- **VN**: einen Methacryloylrest.

Beispiele für mesogene Verbindungen der Formel 5 sind 4,4'-Biphenyl-bis-(6-methacryloyloxyhexanoat) oder 1,4-Bis-[(4-methacryloyloxybutoxy)phenylcarboxy]benzol, deren Herstellung im Beispielteil beschrieben ist oder Verbindungen der Formeln I, II, III und/oder IV 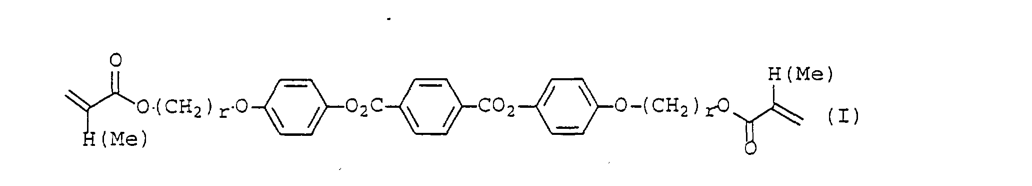 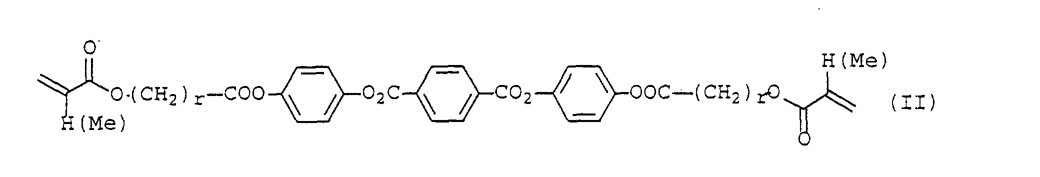 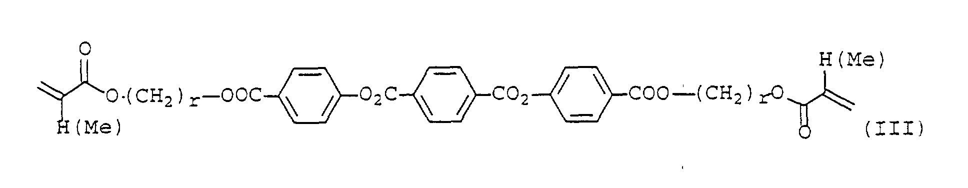 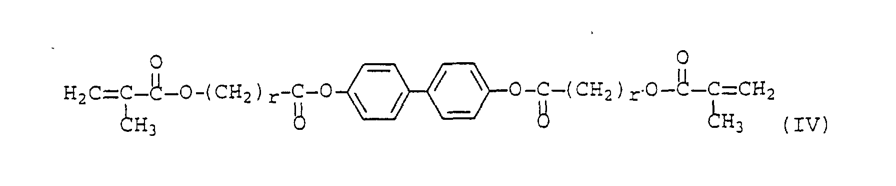 bei denen **r** vorzugsweise ganze Zahlen von 3 bis 6 bedeutet. Beispiele für nichtmesogene Verbindungen, die als Zusatzkomponenten verwendet werden können, sind Bisacrylate oder Bismethacrylate geradkettiger oder verzweigter aliphatischer oder cycloaliphatischer Diole oder Triole oder von Polyethern, Trismethacrylate oder Bisvinylether aliphatischer Diole, einzeln oder als Gemische solcher Verbindungen.

Außerdem können die erfindungsgemäßen LC-Organosiloxane auch mit Substanzen abgemischt werden, die keine polymerisierbaren Gruppen enthalten und in dem nach der Polymerisation entstehenden Stoff als externer Weichmacher fungieren. Beispiele für diese Art Verbindungen sind Phthalsäurediester, Sebacinsäurediester oder sonstige, zu diesem Zweck üblicherweise verwendete Verbindungen.

Vor der Vernetzung können die flüssigkristallinen Organosiloxane mit weiteren eigenschaftsgebenden, copolymerisierbaren Verbindungen, beispielsweise weiteren chiralen, hydrosilylierfähigen oder nicht hydrosilylierfähigen Verbindungen zur Einstellung gesuchter Eigenschaften wie z. B. gewünschten Reflexionswellenlängen vermischt werden. Ebenso können farbgebende Verbindungen zugemischt werden.

Die erfindungsgemäßen flüssigkristallinen Organosiloxane können dadurch hergestellt werden, daß aus Einheiten der allgemeinen Formel 6 aufgebaute Organosiloxane

[R_{b}H_{c}SiO_{(4-b-c)/2}] (6)

worin **R, b** und **c** die für die allgemeine Formel 3 angegebenen Bedeutungen aufweisen,
umgesetzt werden mit einem Gemisch von Verbindungen der vorstehenden allgemeinen Formel 4 und gegebenenfalls 7

H₂C=CH-(CH₂)ₘ₋₂-(O)ₙ-(A)ₜ-Q-X (7)

worin
**X, A, Q, m, n** und **t** die für die allgemeine Formel 2 angegebenen Bedeutungen aufweisen, mit der Maßgabe, daß in den Verbindungen der allgemeinen Formel 7 keine Sauerstoffatome direkt aneinander gebunden sind.

Die Verbindungen der allgemeinen Formel 4 sind dadurch gekennzeichnet, daß sie an einem Ende des bevorzugt stabförmigen Moleküls eine endständige, hydrosilylierbare olefinische Mehrfachbindung, bevorzugt eine Doppelbindung, aufweisen, am anderen Molekülende aber eine in ihrer Reaktivität von der olefinischen verschiedene, polymerisierbare Gruppe, die zwar vernetzbar ist, aber die Hydrosilylierung der olefinischen Mehrfachbindung nicht behindert.

Die vorstehende Umsetzung erfolgt vorzugsweise in Gegenwart von mindestens einem Metall der Platingruppe und/oder dessen Verbindungen als Katalysator. Die Summe der Molzahlen der Verbindungen der allgemeinen Formeln 4 und 7 entspricht, abhängig von der jeweiligen Reaktivität, vorzugsweise dem 0,75- bis 1,25-fachen der Summe aller Si-H-Bindungen in den Organosiloxanen der allgemeinen Formel 6.

Beispiel für geeignete Katalysatoren sind Platin, Palladium, Rhodium, Iridium und deren Verbindungen, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auch auf Trägern, wie Siliciumdioxyd, Aluminiumoxyd oder Aktivkohle befinden kann, Verbindungen oder Komplexe von Platin, wie Platinhalogenide, z. B. PtCl₄, H₂PtCl₆ x 6 H₂O, Na₂PtCl₄ x 4 H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆ x 6 H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Katalysator wird vorzugsweise in Mengen 0,05 bis 0,50 mmol eingesetzt, jeweils berechnet als elementares Platin und bezogen auf die Molzahl der Si-H-Gruppen, welche aufgebaut sind aus Einheiten der allgemeinen Formel 6.

Die Reaktion wird bevorzugt bei Temperaturen von 0 bis 150 °C, bevorzugt bei Drücken von 0,05 MPa bis 2,0 MPa durchgeführt.

Sollten die Organosiloxane, welche aufgebaut sind aus Einheiten der allgemeinen Formel 6, oder die Verbindung(en) der Formeln 4 bzw. 7 sehr reaktionsträge sein, kann auch bei höheren Temperaturen, höheren Drücken und in Anwesenheit von mehr Platinkatalysator gearbeitet werden.

Vorzugsweise wird die Reaktion in einem Lösungsmittel durchgeführt, welches insbesondere aprotisch sein sollte; Lösungsmittel oder Lösungsmittelgemische mit einem Siedepunkt bzw. Siedebereich von bis zu 160 °C, insbesondere von bis zu 120 °C bei jeweils 0,1 MPa (abs.) sind bevorzugt. Beispiele für Lösungsmittel sind Ester, wie Methylacetat, Ethylacetat, n- und iso-Propylacetat, n-, sec.- und t.-Butylacetat, Ethylformiat und Diethylcarbonat; Ether, wie Dioxan, Diethylether, Di-n-propylether, Diisopropylether, Di-n-butylether, Tetrahydrofuran, Ethylenglycolmonomethylether, Ethylenglycolmonoethylether, Diethylenglycoldimethylether und Anisol, chlorierte Kohlenwasserstoffe, wie Dichlormethan, Trichlormethan, Tetrachlormethan, 1,2-Dichlorethan, Trichlorethylen, Tetrachlorethylen und Chlorbenzol; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methylisobutylketon; oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Die Herstellung der Verbindungen der allgemeinen Formel 7 ist bekannt, beispielsweise aus US-A-5,221,759.

Die flüssigkristallinen Organosiloxane können, ohne auf diese Anwendung begrenzt zu sein, als Grundstoffe für die Herstellung von Pigmenten eingesetzt werden. Dazu werden die flüssigkristallinen Organosiloxane orientiert, vernetzt und anschließend zu Pigmenten aufbereitet. Die flüssigkristallinen Organosiloxane können auch, gegebenenfalls als Abmischung mit vorstehend genannten Verbindungen zur Herstellung von Filmen eingesetzt werden. Diese Filme werden beispielsweise in Flüssigkristall-Displays verwendet.

In den folgenden Beispielen sind, falls nicht jeweils anders angegeben,
a) alle Mengenangaben auf das Gewicht bezogen;
b) alle Drücke 0,10 MPa (abs);
c) alle Temperaturen 20 °C;
d) die Abkürzungen verwendet:
   C = kristallin,
   I = isotrop,
   N = nematisch,
   S = smektisch,
   Fp. = Schmelzpunkt,
   BHT = 2,6-Ditert.-butyl-4-methylphenol.

### Beispiele

### Beispiel 1:

### 4-Allyloxybenzoesäure-(4-(4-methacryloyloxybutoxy)phenyl)ester

162, 1 g (0,6 Mol) 4-Allyloxybenzoesäure-(4-hydroxyphenyl)ester, bekannt aus US-A-5,211,877, wurden in 3 l Methylethylketon gelöst und dazu 1,32 kg (6 Mol) käufliches 1,4-Dibrombutan und 414 g (3 Mol) Kaliumcarbonat zugegeben. Das Gemisch wurde unter Rühren auf 80 °C erwärmt und 4 Std. bei dieser Temperatur gehalten. Danach wurde abgekühlt, das restliche Kaliumcarbonat abfiltriert und das Filtrat eingeengt. Nach Abziehen des überschüssigen Dibrombutans wurde das Rohprodukt zweimal aus Isopropanol umkristallisiert. Erhalten wurde in einer Ausbeute von 90 % 4-Allyloxybenzoesäure-(4-(4-brombutoxy)phenyl)ester. Der Ester zeigt folgendes Phasenverhalten: C 64 N 81-85 isotrop.

118,4 g (0,29 Mol) dieses Esters wurden bei 70 °C in 50 ml Dimethylformamid gelöst, 0,3 g 2-tert. Butyl-4,6-dimethylphenol als Stabilisator zugefügt und 111,7 g (0,9 Mol) trockenes Methacrylsäure-Kaliumsalz zugegeben und mit 70 ml Toluol verdünnt. Das Reaktionsgemisch wurde bei 100 °C 6 Std. gerührt, dann abgekühlt und mit 800 ml Methyl-tert.-butylether verdünnt. Der Niederschlag wurde abgesaugt, die Waschlösung und das Filtrat vereinigt und dreimal mit Wasser gewaschen. Danach wurde eingeengt und das erhaltene Rohprodukt aus Isopropanol umkristallisiert. Erhalten wurde in einer Ausbeute von 83 % 4-Allyloxybenzoesäure-(4-(4-methacryloyloxybutoxy)phenyl)ester vom Fp. 62-63 °C. Der Ester hat zwischen 41 und 45 °C eine nematische Phase, die nur bei Unterkühlung auftritt.
In analoger Weise wurden hergestellt:
4-Allyloxybenzoesäure-(4-(4-methacryloyloxyethoxy)phenyl)ester Fp. 75-77 °C
4-Allyloxybenzoesäure-(4-(4-methacryloyloxypropoxy)phenyl)ester Fp. 67-68 °C
4-Allyloxybenzoesäure-(4-(4-methacryloyloxypentyloxy)phenyl) ester Fp. 50-52 °C (nematisch bei Unterkühlung zwischen 47 bis 44°)
4-Allyloxybenzoesäure-(4-(4-methacryloyloxyhexyloxy)phenyl)ester
Fp. 51 °C (nematisch bei Unterkühlung zwischen 51 bis 48°) 4-Allyloxybenzoesäure-(4-(4-methacryloyloxydecyloxy)phenyl)ester Fp. 46°C

Ein 1 : 1 : 1 Gemisch des Butoxy-, Pentyloxy und Hexyloxyderivats hat einen Mischschmelzpunkt bei 28 °C; dieses Gemisch (nematisch) klärt bei 43 °C.

### Beispiel 2:

### Gemisch von 4-Allyloxybenzoesäure-[4-(4-methacryloylethoxy(ethoxy)ₙ)phenyl]-estern mit n = 1 - 6

55,3 g (ca. 0,14 Mol) an H₂C=CH-CH₂-O-C₆H₄-COO-C₆H₄-O-(CH₂CH₂O)ₙH (Gemisch von n = 2, 3 und 4, hier mit einem Durchschnittswert von n = 3,4; in bekannter Verfahrensweise durch Ethoxylierung von 4-Allyloxyphenylbenzoesäure-(4-hydroxyphenyl)ester - bekannt aus EP 358 208 - durch Addition von Ethylenoxid unter KOH-Katalyse erhalten) wurden in 50 ml Toluol gelöst, 3 g 4-Toluolsulfonsäure und 46,3 g (0,3 Mol) Methacrylsäureanhydrid sowie 0,2 g BHT (Polymerisationsinhibitor) zugegeben. Das Gemisch wurde unter Rühren auf 100 °C erwärmt und 1 h weitergerührt. Nach Abkühlung wurde mit 200 ml Toluol verdünnt, durch Waschen mit 0,4-molarer NaOH die überschüssige Säure abgetrennt und die organische Phase mit Wasser neutral gewaschen. Die organische Phase wurde eingeengt. Durch Tempern im Vakuum bei 0,1 hPa und 55 °C wurden die flüchtigen Bestandteile entfernt. Das übrig bleibende Rohprodukt wurde durch Umkristallisieren aus 700 ml Toluol gereinigt und durch fraktionierte Kristallisation in ein Estergemisch der folgenden allgemeinen Formel
H₂C=CH-CH₂-O-C₆H₄-COO-C₆H₄-O-(CH₂CH₂O)ₐ-OOC-C(CH₃)=CH₂ mit a rechnerisch gleich 2,2 (25 g) und einem Schmelzpunkt von 57 °C und einen flüssigen Anteil gleicher Formel, aber a gleich 5,2 (35 g) zerlegt.

### Beispiel 3:

### 4-Allyloxybenzoesäure[4-(3-methacryloyloxypropylcarboxy)phenyl -ester (CH₂=CH-CH₂O-C₆H₄COOC₆H₄OCO(CH₂)₃-OCO-C(CH₃)=CH₂)

119 g (0,44 Mol) 4-Allyloxybenzoesäure-(4-hydroxyphenyl)ester und 81,6 g (0,44 Mol) käufliches 4-Brombuttersäurechlorid (Fluka, D-89231 Neu-Ulm) wurden in 250 ml Toluol gelöst und das Gemisch auf 70 °C erwärmt. Dazu wurden 50 g Triethylamin, gelöst in 50 ml Toluol, in 1 h unter Rühren zugetropft. Nach weiteren 2 h Rühren bei 70 ° wurde abgekühlt und das entstandene Aminhydrochlorid abfiltriert. Nach Waschung des Filtrats mit NaOH-Lösung (3 %ig), Wasser, Salzsäure (2 %ig) und nochmals mit Wasser wurde eingeengt und das erhaltene Rohprodukt aus Isopropanol umkristallisiert. Erhalten wurde in 75 % Ausbeute 4-Allyloxybenzoesäure-[4-(4-brombutyryloxy)phenyl]ester C₂₀H₁₉BrO₅ (419,3).

176 g (0,42 Mol) dieser Verbindung und 86,9 g (0,7 Mol) Kaliummethacrylat wurden in 150 ml N-Methylpyrrolidon gelöst, das Gemisch auf 95 °C erwärmt und bei dieser Temperatur 5 h gerührt. Danach wurde abgekühlt, mit 600 ml Methyl-tert.-butylether und 150 ml Wasser versetzt und die sich bildenden zwei Phasen getrennt. Die organische Phase wurde dreimal mit Wasser gewaschen, eingeengt und das Produkt kristallisiert. Nach dreimaliger Umkristallisation aus Isopropanol wurde das Zielprodukt in 63 % Ausbeute erhalten. C₂₄H₂₈O₇ (428,5). Der Schmelzpunkt liegt bei 66 °C.

In völlig analoger Weise wurde auch 4-Allyloxybenzoesäure[4-(5-methacryloyloxypentylcarboxy)phenyl]ester mit Hilfe von 6-Bromhexansäure hergestellt, der einen Schmelzpunkt von 52 °C hat.

Genau analog wurde auch 4-Allyloxybenzoesäure-[4-(10-methacryloyloxydecylcarboxy)phenyl]ester (Phaseneigenschaften C 55 N,I 60 I) hergestellt.

### Beispiel 4:

### 4-(4-Allyloxybenzoyloxy)benzoesäure[4-(4-methacryloyloxybutyl) ester (CH₂=CH-CH₂O-C₆H₄-COO-C₆H₄-COO-(CH₂)₄-OCO-C(CH₃)=CH₂)

Aus 4-Acetoxybenzoesäurechlorid und 4-Hydroxybenzaldehyd wurde in 45 % Ausbeute 4-Acetoxybenzoesäure-(4-formyl)phenylester, Fp. 98 - 100 °C, hergestellt. 18 g (0,063 Mol) dieses Aldehyds wurden in 180 ml Eisessig gelöst, 9,5 g Kaliumpermanganat und 180 ml Methylethylketon zugegeben und das Gemisch unter Rühren auf 50 °C erwärmt. Nach 8 h Rühren wurde mit Salzsäure angesäuert, mit 250 ml Essigester versetzt und die Phasen aufgearbeitet. Aus der eingeengten Essigesterlösung wurden 16,8 g (89 %) 4-(4-Acetoxybenzoyloxy)benzoesäure erhalten. C₁₆H₁₂O₆ (300,3). Aus dieser Säure wurde durch übliche Umsetzung mit Thionylchlorid das Säurechlorid in 95 % Ausbeute erhalten.

16,5 g (0,052 Mol) dieses Säurechlorids und 8 g (0,052 Mol) 1,4-Butandiolmonomethacrylat (Polysciences Inc., D-69208 Eppelheim) wurden in 50 ml Toluol gelöst, 0,02 g BHT zugefügt, 6 g Triethylamin zugegeben und das Gemisch 1 h bei 80 - 100 °C gerührt. Nach Aufarbeitung über Phasentrennung, Waschen und Trocknen wurde der gereinigte Rückstand mit 100 ml Methanol versetzt und auf 15 °C abgekühlt. Die ausgefallenen Kristalle an
4-Acetoxybenzoesäure-[4-(4-methacryloyloxybutoxy)phenyl]ester; 16 g (70 %, Reinheit ca. 90 %) wurden abfiltriert und getrocknet.

8,8 g (0,02 Mol) dieses Esters, 0,01 g BHT und 4,6 g einer Lösung von 9 g Ammoniak in 50 g Methanol wurden in 20 ml THF + 20 ml Methanol gelöst und das Gemisch 2,5 h bei 50 °C gerührt. Zur Entfernung eines kleinen Anteils an Polymer wurde in Driveron/Petrolether (4 : 1) gelöst, mit Tonsil® L 80 (Südchemie AG, München) durchgerührt, abfiltriert und eingeengt. Erhalten wurden 8,8 g Produkt (90 %ig). Nach einer Woche Stehen kristallisierte die Verbindung, die einen Schmelzpunkt von ca. 20 °C hat.

### Beispiel 5:

### 4-Allyloxybenzoesäure-(4-(methacryloyloxyethyloxycarbonylethyl oxycarbonyl)-phenyl)ester

Zunächst wurden aus 258,3 g (0,6 Mol) Hydrochinon-bis-(4-allyloxybenzoat) mit 36 g (0,66 Mol) Natriummethylat bei 30-40 °C in 900 ml Tetrahydrofuran 4-Allyloxybenzoesäure-(4-hydroxyphenyl)ester-Na-Salz hergestellt und das Reaktionsgemisch mit 70,5 g (0,7 Mol) Bernsteinsäureanhydrid versetzt. Durch Zusatz von 450 ml Tetrahydrofuran wurde das Gemisch rührfähig gehalten. Nach zwei Stunden Rühren bei 20 °C wurde mit 3 n Salzsäure angesäuert und die Phasen getrennt. Die organische Phase wurde zweimal mit Wasser gewaschen und danach in 4,5 h mit n-Pentan als Schleppmittel azeotrop getrocknet. Durch übliche Kristallisierweise wurden zwei Teilmengen eines Rohproduktes erhalten, die vereinigt und zusammen aus Isopropanol umkristallisiert wurden. Erhalten wurden 142 g (64 %) an Bernsteinsäuremono-(4-(4-allyloxybenzoyloxy)phenyl)ester mit einem Schmelzpunkt 141- 142 °C.

Durch übliche Umsetzung von 37 g (0,1 Mol) dieser Säure in 150 ml Toluol mit 12,8 g (0,11 Mol) Thionylchlorid bei 60 - 80 °C wurde das kristalline Säurechlorid in 96 % Ausbeute erhalten.

10,1 g (0,1 Mol) Triethylamin, 12,7 g (0,09 Mol) Methacrylsäure-2-hydroxyethylester und 0,03 g BHT wurden in 200 ml Toluol gelöst und dazu unter Rühren 35,4 g (0,09 Mol) des oben beschriebenen Säurechlorids in Teilmengen so zugefügt, daß die Temperatur des Gemisches 45 °C nicht überstieg. Nach 1 h Rühren bei 40 °C wurde abgekühlt, das ausgefallene Aminhydrochlorid abgetrennt und das Toluol abgedampft. Der Rückstand wurde in 400 ml Ether/Petrolether (3 : 1) aufgenommen, mit 2 n NaOH und danach mit Wasser gewaschen, die Phasen getrennt und die organische Phase mit Natriumsulfat getrocknet. Durch Einengen und Abkühlen wurde das Zielprodukt in 57 % Ausbeute erhalten. Es schmilzt bei 58-59°C.

### Beispiel 6:

### Flüssig-kristallines Silicon mit niedriger Glastemperatur

71 g (0,13 Mol) 4-Allyloxybenzoesäurecholesterinester wurden mit 170 ml Toluol versetzt. Die Suspension wurde unter Rühren zum Sieden gebracht und Toluol azeotrop andestilliert. Nach Abkühlen auf ca. 60 °C wurden 21 g (0,35 Mol) 1,3,5,7-Tetramethylcyclotetrasiloxan und 0.53 g einer 0.5 Gew.%-igen Lösung des Cyclooctadienyldichloroplatin-Katalysators (Wacker-Chemie GmbH, D-81737 München) in Methylenchlorid zugegeben. Die Reaktionslösung wurde auf 85 °C erwärmt und für 1 Stunde gerührt. Nach Abkühlen auf 40 °C wurden 80 g (0,194 Mol) 4-Allyloxybenzoesäure-(4-(4-methacryloyloxybutoxy)phenyl)ester (nach Beispiel 1), 0,09 g (0.4 mmol)BHT und 1.06 g einer 0,5 Gew.%-igen Lösung des Cyclooctadienyldichloroplatin-Katalysators in Methylenchlorid zugegeben. Die Lösung wurde danach auf ca. 75 °C erwärmt und für 1,5 Stunden gerührt. Nach Abkühlen auf 20 °C wurden 37,2 g (89 mMol) 4-Allyloxybenzoesäure-(4-(4-methacryloyloxybutoxy)phenyl)ester , 9,85 g (22 mMol) Methacrylsäurecholesterinester und 0,09 g BHT zugegeben. Anschließend wurde die Lösung über eine kurze Celite® (Manville Corp., Denver, USA)-Säule filtriert und 5,36 g des Photoinitiators Irgacure® 907 (Ciba-Geigy) zugegeben.
Die Lösung wurde mittels eines Dünnschichtverdampfers bei 25 hPa Druck und einer Heizmanteltemperatur von 90°C vom Lösungsmittel befreit (Restgehalt < 1 Gew.% Toluol).

Die so erhaltene Flüssigkristallmischung besitzt einen Glasübergang bei ca. - 1°C. Die Klärtemperatur (Peak) von cholesterisch zu isotrop liegt bei 112°C. Die Viskosität beträgt bei 90°C ca. 620 mPas.
Bei 90 °C orientierte und UV-vernetzte dünne Filme des Materials weisen nach dem Abkühlen auf 20 °C eine Reflexionswellenlänge von 467 nm auf. Das vernetzte Material besitzt eine Glasübergangstemperatur von 72 °C. Der durch Behandlung mit Chloroform aus dem vernetzten Material extrahierbare Anteil beträgt 8 Gew.-%.

### Beispiel 7:

Flüssig-kristallines Silicon mit niedriger Glastemperatur 71 g (0,13 Mol) 4-Allyloxybenzoesäurecholesterinester wurden mit 170 ml Toluol versetzt. Die Suspension wurde unter Rühren zum Sieden gebracht und Toluol azeotrop andestilliert. Nach Abkühlen auf ca. 60 °C wurden 21 g (0,35 Mol) 1,3,5,7-Tetramethyl-cyclotetrasiloxan und 0.53 g einer 0.5 Gew.%-igen Lösung des Cyclooctadienyldichloroplatin-Katalysators (Wacker-Chemie, D-81737 München) in Methylenchlorid zugefügt. Die Reaktionslösung wurde auf 85 °C erwärmt und für 1 Stunde gerührt. Nach Abkühlen auf ca. 40 °C wurden 85 g (0,194 Mol). 4-Allyloxybenzoesäure-(4-(4-methacryloyloxyhexyloxy)phenyl)ester (nach Beispiel 1), 0,09 g (0.4 mmol) BHT und 1.06 g einer 0,5 Gew.%-igen Lösung des Cyclooctadienyldichloroplatin-Katalysators in Methylenchlorid zugegeben. Die Lösung wurde anschließend auf ca. 75 °C erwärmt und für 1,5 Stunden gerührt. Nach Abkühlen auf 20 °C wurden 37.6 g (85 m Mol) 4-Allyloxybenzoesäure-(4-(4-methacryloyloxyhexyloxy)-phenyl)ester, 12 g (26 mMol) Methacrylsäurecholesterinester und 0.09 g BHT zugegeben. Anschließend wurde die Lösung über eine kurze Celite® -Säule filtriert und 5.36 g des Photoinitiators Irgacure® 907 zugegeben.
Die Lösung wurde mittels eines Dünnschichtverdampfers bei 25 mbar Druck und einer Heizmanteltemperatur von 90°C vom Lösungsmittel befreit (Restgehalt < 1 Gew.% Toluol).

Die so erhaltene Flüssigkristallmischung besitzt einen Glasübergang bei ca. - 9°C. Die Klärtemperatur (Peak) von cholesterisch zu isotrop liegt bei 104°C. Die Viskosität beträgt bei 90°C ca. 710 mPas.

Bei 90 °C orientierte und UV-vernetzte dünne Filme des Materials weisen nach dem Abkühlen auf Raumtemperatur eine Reflexionswellenlänge von 465 nm auf. Das vernetzte Material besitzt eine Glasübergangstemperatur von 71 °C. Der durch Behandlung mit Chloroform aus dem vernetzten Material extrahierbare Anteil beträgt 7 Gew.-%.

### Beispiel 8:

### Flüssig-kristallines Silicon mit niedriger Glastemperatur (Mischung zweier verschiedener Vernetzerbausteine)

71 g (130 mmol) 4-Allyloxybenzoesäurecholesterinester wurden mit 170 ml Toluol versetzt. Die Suspension wurde unter Rühren zum Sieden gebracht und Toluol azeotrop andestilliert. Nach Abkühlen auf ca. 60 °C wurden 21 g (0,35 Mol) 1,3,5,7-Tetramethyl-cyclotetrasiloxan und 0.53 g einer 0.5 Gew.%-igen Lösung des Cyclooctadienyldichloroplatin-Katalysators (Wacker-Chemie, 81737 München) in Methylenchlorid zugegeben. Die Reaktionslösung wurde auf 85 °C erwärmt und für 1 Stunde gerührt. Nach Abkühlen auf ca. 40 °C wurden 40 g (97 mmol) 4-Allyloxybenzoesäure-(4-(4-methacryloyloxybutoxy)phenyl)ester (nach Beispiel 1), 42 g (97 mmol) 4-Allyloxybenzoesäure-(4-(4-methacryloyloxyhexyloxy)phenyl)ester (nach Beispiel 1), 0,09 g (0.4 mmol) BHT und 1.06 g einer 0.5 Gew.%-igen Lösung des Cyclooctadienyldichloroplatin-Katalysators in Methylenchlorid zugegeben. Die Lösung wurde dann auf ca. 75 °C erwärmt und 1,5 Stunden gerührt. Nach Abkühlen auf 20 °C wurden 22 g (97 mmol) 4-Allyloxybenzoesäure-(4-(4-methacryloyloxybutoxy)phenyl)ester, 22 g (0,05 Mol) 4-Allyloxybenzoesäure-(4-(4-methacryloyloxyhexyloxy)phenyl)ester und 0,09 g BHT zugegeben. Anschließend wurde die Lösung über eine kurze Celite® -Säule filtriert und 5,36 g des Photoinitiators Irgacure® 907 zugegeben.
Die Lösung wurde mittels eines Dünnschichtverdampfers bei 25 mbar Druck und einer Heizmanteltemperatur von 90°C vom Lösungsmittel befreit (Restgehalt < 1 Gew.% Toluol).

Die so erhaltene Flüssigkristallmischung besitzt einen Glasübergang bei ca. - 13°C. Die Klärtemperatur (Peak) von cholesterisch zu isotrop liegt bei 114°C. Die Viskosität beträgt bei 90°C ca. 700 mPas.

Bei 90 °C orientierte und UV-vernetzte dünne Filme des Materials weisen nach dem Abkühlen auf Raumtemperatur eine Reflexionswellenlänge von 540 nm auf.
Das vernetzte Material besitzt eine Glasübergangstemperatur von 72 °C. Der durch Behandlung mit Chloroform aus dem vernetzten Material extrahierbare Anteil beträgt 8 Gew.-%.

### Beispiel 9 (Vergleichsbeispiel):

### Bekanntes flüssig-kristallines Silicon

71 g (0,13 Mol) 4-Allyloxybenzoesäurecholesterinester wurden mit 170 ml Toluol versetzt. Die Suspension wurde unter Rühren zum Sieden gebracht und Toluol azeotrop andestilliert. Nach Abkühlen auf ca. 60 °C wurden 21 g (0,351 Mol) 1,3,5,7-Tetramethylcyclotetrasiloxan und 0.5 g einer 0.5 Gew.%igen Lösung des Cyclooctadienyldichloroplatin-Katalysators in Methylenchlorid zugegeben. Die Reaktionslösung wurde auf 85 °C erwärmt und für 1 Stunde gerührt. Nach Abkühlen auf ca. 40 °C wurden 65.5 g (0,194 Mol) 4-Allyloxybenzoesäure-(4-methacryloyloxyphenyl)ester, 0.08 g (0,035 Mol) BHT und 1.06 g einer 0.5 Gew.%-igen Lösung des Cyclooctadienyldichloroplatin-Katalysators in Methylenchlorid zugegeben. Die Lösung wurde anschließend auf ca. 75 °C erwärmt und für 1,5 Stunden gerührt. Nach Abkühlen auf 20 °C wurden 32.4 g (96 mMol) 4-Allyloxybenzoesäure-(4-methacryloyloxyphenyl)ester, 11.8 g (26 mMol) Methacrylsäurecholesterinester und 0.078 g (0,035 Mol) BHT zugegeben. Anschließend wurde die Lösung über eine kurze Celite-Säule filtriert und 4.92 g des Photoinitiators Irgacure® 907 zugegeben.
Die Lösung wurde mittels eines Dünnschichtverdampfers bei 25 hPa Druck und einer Heizmanteltemperatur von 90°C vom Lösungsmittel befreit (Restgehalt < 1 Gew.% Toluol).
Die so erhaltene Flüssigkristallmischung besitzt einen Glasübergang bei ca. 9°C. Die Klärtemperatur (Peak) von cholesterisch zu isotrop liegt bei 136 °C. Die Viskosität beträgt bei 90°C ca. 1000 mPas. Bei 90 °C orientierte und UV-vernetzte dünne Filme des Materials weisen nach dem Abkühlen auf Raumtemperatur eine Reflexionswellenlänge von 572 nm auf.
Das vernetzte Material besitzt eine Glasübergangstemperatur von 88 °C. Der durch Behandlung mit Chloroform aus dem vernetzten Material extrahierbare Anteil beträgt 14 Gew.-%.

### Beispiel 10:

### Blaushiftfreie LC-Pigmente

Die auf Siloxanen beruhenden Pigmente mit flüssigkristalliner Struktur wurden aus den gemäß den Beispielen 6, 7 und 9 erhaltenen Mischungen hergestellt. Analog der in US-A-5,362,315 (entspricht EP 0 686 674) beschriebenen Vorgehensweise wurde photochemisch vernetzt, das vernetzte Material von der Trägerfolie abgelöst und gemahlen. Jeweils 1 g der so erhaltenen Pigmente wurden in 9 g eines konventionellen Acrylat-Melaminharz-Bindemittelsystem eingearbeitet, nachdem die Viskosität mit einem Verdünner auf eine Auslaufzeit von 80 sec. aus einem DIN-4-Auslaufbecher eingestellt worden war. Die Mischung wurde über Nacht stehen gelassen und mit einem Filmziehgerät (Fa. Erichsen, D-58675 Hemer) auf schwarzen Glanzkarton aufgetragen, wobei die Spalthöhe 300 µm und die Ziehgeschwindigkeit 10 mm/sec betrugen. Nach einer Ablüftzeit von 10 min. bei RT wurden die Proben 1 h bei 80 °C bzw. 130 °C getempert. Die Reflexionsspektren wurden mit einem Reflexionsgoniometer (H.-J. Eberle, A. Miller, F.-H. Kreuzer, Liq. Cryst. 5, 907-916 (1989)) mit einer Winkelgeometrie 45°/25° vermessen. Als Vergleichsmaterial wurde ein Material nach Beispiel 9 verwendet (Spacerlänge: 0)
Die Glastemperaturen wurden mit einem DSC-Gerät Typ TA 4000 der Fa. Mettler-Toledo (D-61449 Steinbach) bestimmt. In der Tabelle I sind als Angabe für Tg die Inflection Points angegeben.

**Tabelle I**

| Beispiel | Spacerlänge E; Wert von r | T_{g} | Mittenwellenlänge nach Temperung bei 80°C | Mittenwellenlänge nach Temperung bei 130°C | Abnahme der Mittenwellenlänge |
|---|---|---|---|---|---|
| A* | 4 | 72 | 461 | 459 | 2 |
| B** | 6 | 71 | 460 | 460 | 0 |
| C*** | 0 | 88 | 580 | 561 | 19 |

| | | | | | |
|---|---|---|---|---|---|
| * Pigmentgrundmasse, enthaltend Vernetzeranteile gemäß Beisp. 6 | | | | | |
| ** Pigmentgrundmasse, enthaltend Vernetzeranteile gemäß Beisp. 7 | | | | | |
| *** Vergleichsbeispiel, enthaltend Vernetzeranteile gemäß Beisp. 9 | | | | | |

Durch die Verwendung der erfindungsgemäßen Vernetzerbausteine (Beispiel 6 und 7 im Vergleich zu Beispiel 9) können vernetzte Materialien mit niedrigerer Glasübergangstemperatur und gleichzeitig mit geringeren extrahierbaren Anteilen hergestellt werden, wie in Beispiel 10 gezeigt ist.

### Beispiel 11:

### 1,4-Bis-[(4-methacryloyloxybutoxy)phenylcarboxy]benzol

35.0 g (0.1 Mol) Hydrochinon-bis-(4-hydroxybenzoat) wurden mit 58.5 g (0.3 Mol) 4-Brombutylacetat und 55.2 g (0.4 Mol) Kaliumcarbonat in 150 ml Dimethylformamid 2 h bei 100 °C gerührt. Anschließend wurde durch Zugabe von H₂O das Produkt ausgefällt und in 150 ml Toluol bei 80 °C aufgenommen. Die organische Phase wurde mit H₂O gewaschen und Hydrochinon-bis-4-(4-acetoxybutyloxy)benzoat durch Abkühlung auskristallisiert. Ausbeute: 52.1 g (90 %).
50.0 g (85 mmol) Hydrochinon-bis-4-(4-acetoxybutyloxy)benzoat in 150 ml Toluol und 100 ml Ethanol wurden mit 15.0 g (7.5 %) p-Toluolsulfonsäure durch abdestillieren von Ethylacetat/Ethanol in das Hydrochinon-bis-4-(4-hydroxybutyloxy)benzoat umgeestert. Während der Reaktion wurde der Destillationsverlust von Ethanol durch Zugabe von 50 ml Ethanol und 50 ml Toluol ausgeglichen. Das beim Abkühlen ausgefallene Produkt wurde mit Toluol gewaschen und getrocknet. Ausbeute 35.7 g (85 %). Das Produkt hat einen Schmelzpunkt von 180 °C.
35.0 g (70 mmol) Hydrochinon-bis-4-(4-hydroxybutyloxy)benzoat wurden mit 55.0 g (0.35 Mol ) Methacrylsäureanhydrid und 3.5 g (5.0 %) p-Toluolsulfonsäure unter Zugabe von 50 mg 3,5-Di-tert. butyl-4-hydroxytoluol bei 100 °C innerhalb von 2 h verestert. Das Produkt wurde mit Ethanol gefällt, in Ethylacetat aufgenommen und mit Natriumhydrogencarbonat und H₂O gewaschen. Anschließend wurde über Na₂SO₄ getrocknet, das Lösungsmittel im Vakuum abdestilliert und das 1,4-Bis-[(4-methacryloyloxybutoxy)phenylcarboxy]benzol in Ethylacetat umkristallisiert. Ausbeute: 42.0 g (95 %). Das Produkt zeigt folgendes Phasenverhalten: C 81 N 142-145 isotrop.

### Beispiel 12:

### 4,4'-Biphenyl-bis-(6-methacryloyloxyhexanoat)

18,6 g (0,1 Mol) Biphenyl-4,4'-diol (Merck, 64271 Darmstadt) wurden analog dem Verfahren in Beispiel 3 mit 42,6 g (0,2 Mol) 6-Bromhexansäurechlorid in Toluol mit Triethylamin als Säurefänger umgesetzt. Erhalten wurden 42 g (77,8%) an 4,4'-Biphenyl-bis-(6-bromhexanoat) mit Fp. 96 °C.
35 g (0,065 Mol) dieser Verbindung und 25 g (0,2 Mol) Methacrylsäure-Kaliumsalz wurden in 30 ml Dimethylformamid suspendiert, 0,04 g BHT zugegeben und das Gemisch unter Rühren 6,5 h auf 95°C erwärmt. Danach wurde abgekühlt, mit Wasser und Methyl-tert.-butylether aufgenommen und die sich bildenden zwei Phasen getrennt. Durch Waschen, Trocknen und Einengen der organischen Phase wurde ein Rohprodukt erhalten, das nach Umkristallisieren aus Methanol einen Schmelzbereich von 50-59 °C hat und bei Abkühlung auf 56 °C eine unterkühlbare smektische Phase zeigt.

In gleicher Weise wurde mit 11-Bromundecansäure auch 4,4'-Biphenyl-bis-(11-methacryloyloxyundecanoat) hergestellt.

## Patentansprüche

1. Organosiloxane, die mindestens eine Gruppe der allgemeinen Formel 1
-(CH₂)ₚ-(O)_{q}-C₆H₄-Z-(COO)ₛ-[A-M]ₜ-E-(CH₂-CH₂-O)ₐ-VN (1)
und gegebenenfalls eine Gruppe der allgemeinen Formel 2
-(CH₂)ₘ-(O)ₙ-(A)ₜ-Q-X (2)
aufweisen, wobei
**X** einen Cholesteryl-, Dihydrocholesteryl-, Doristeryl-, Isosorbidyl-, Isomannidyl- oder Cholsäurerest oder einen unsubstituierten oder substituierten Rest, der ausgewählt wird aus 1,4-Phenyl-, 4,4'-Biphenylyl-, 1,4-Cyclohexylen-, 4,4'-Bicyclohexylen-, 4,4'-Cyclohexylenphenylen-, 2,5-substituierten 1,3-Dioxanyl- und Pyrimidinylrest, wobei der Substituent ein C₁- bis C₅-Alkoxyrest, C₁- bis C₅-Alkylrest, Cyanorest, Chlorrest oder Nitrorest sein kann,
**Q** eine -COO-Gruppe oder eine -OOC-Gruppe oder eine -O-Gruppe oder eine chemische Bindung oder eine -O-(C=O)-O-Gruppe,
**Z** eine chemische Bindung oder eine Gruppe -CH₂- oder -CH₂-CH₂-,
**A** einen 1,4-Phenylen-, 1,5-Naphthylen-, 2,6- Naphthylen-, 2,7-Naphthylen-, 4,4'-Biphenylen-, 1,4-Cyclohexylen-, 4,4'-Bicylohexylen-, 4,4'-Cyclohexylenphenylen-, 2,5-(1,3-Dioxanylen)- oder einen Pyrimidinylenrest,
**M** eine chemische Bindung, ein Sauerstoffatom oder eine Gruppe -COO-, -OCO- oder -OOC-(CH₂)ᵥ-COOCH₂CH₂-,
**VN** eine Gruppe -O-C(O)-CH=CH₂, -O-C(O)-C (CH₃)=CH₂, -(CH₂)ᵤ-OCH=CH₂, -CH=CH₂ oder eine Oxiranylgruppe,
**E** eine Gruppe (CH₂)ᵣ, wobei einzelne CH₂-Gruppen durch Sauerstoff ersetzt sein können,
**m und p** jeweils ganze Zahlen von 3 bis 6,
r eine ganze Zahl von 1 bis 10,
**n, q und s** jeweils die Werte 0 oder 1,
**t** den Wert 0 oder eine ganze Zahl von 1 bis 3,
**u und v** jeweils eine ganze Zahl von 2 bis 8 und
**a** den Wert 0 oder eine ganze Zahl von 1 bis 6 bedeuten, mit der Maßgabe, daß in den Gruppen der allgemeinen Formeln 1 und 2 keine Sauerstoffatome direkt aneinander gebunden sind.

2. Organosiloxane nach Anspruch 1, welche aus Einheiten der allgemeinen Formel 3
[R_{b}Mes_{c}SiO_{(4-b-c)/2}] (3)
aufgebaut sind, in der
**R** C₁- bis C₄-Alkylreste,
**Mes** eine Gruppe der allgemeinen Formeln 1 oder 2,
**b** die Werte 0, 1 oder 2 und
**c** die Werte 0 oder 1 bedeuten.

3. Verfahren zur Herstellung der flüssigkristallinen Organosiloxane gemäß Anspruch 1 oder 2, bei dem aus Einheiten der allgemeinen Formel 6 aufgebaute Organosiloxane
[R_{b}H_{c}SiO_{(4-b-c)/2}] (6)
worin **R, b** und **c** die für die allgemeine Formel 3 gemäß Anspruch 3 angegebenen Bedeutungen aufweisen,
umgesetzt werden mit einem Gemisch von Verbindungen der allgemeinen Formeln 4 und gegebenenfalls 7
H₂C=CH-(CH₂)ₚ₋₂-(O)_{q}-C₆H₄-Z-(COO)ₛ-[A-M]ₜ-E-(CH₂-CH₂-O)ₐ-VN (4)
H₂C=CH-(CH₂)ₘ₋₂-(O)ₙ-(A)ₜ-Q-X (7)
worin
**Z, A, E, M, VN, Q, m, n, p, q, s, t** und **a** die für die allgemeinen Formeln 1 und 2 angegebenen Bedeutungen aufweisen, mit der Maßgabe, daß in den Verbindungen der allgemeinen Formeln 4 und 7 keine Sauerstoffatome direkt aneinander gebunden sind.

4. Verfahren zur Vernetzung der Organosiloxane gemäß Anspruch 1 oder 2, bei dem die Organosiloxane mittels freier Radikale dreidimensional vernetzt werden.

5. Verfahren nach Anspruch 4, bei dem die Organosiloxane gemäß Anspruch 1 oder 2 im Gemisch mit Vernetzern der allgemeinen Formel 5
VN-(CH₂)ᵣ-(O-CH₂-CH₂)ₐ-[M-A]ₜ-M-(CH₂-CH₂-O)ₐ-(CH₂)ᵣ-VN (5)
in der
**VN, a, r, A, t** und **M** die in den allgemeinen Formeln 1 und 2 gemäß Anspruch 1 angegebenen Bedeutungen aufweisen, gegebenenfalls im Gemisch mit Verbindungen der allgemeinen Formel 4 gemäß Anspruch 3 und/oder nichtmesogenen Bisacrylaten und/oder Bismethacrylaten vernetzt werden.

6. Vernetzte flüssigkristalline Organosiloxane erhältlich nach dem Verfahren gemäß Anspruch 4 oder 5.

7. Verbindungen der allgemeinen Formel 4
H₂C=CH-(CH₂)ₚ₋₂-(O)_{q}-C₆H₄-Z-(COO)ₛ-[A-M]ₜ-E-(CH₂-CH₂-O)ₐ-VN (4)
worin
**Z, A, E, M, VN, p, q, s, t** und **a** die für die allgemeine Formel 1 gemäß Anspruch 1 angegebenen Bedeutungen aufweisen, mit der Maßgabe, daß in den Verbindungen der allgemeinen Formel 4 keine Sauerstoffatome direkt aneinander gebunden sind.

8. Verwendung der vernetzten flüssigkristallinen Organosiloxane gemäß Anspruch 6 als Pigmente.

9. Verwendung der vernetzten flüssigkristallinen Organosiloxane gemäß Anspruch 1 oder 2 zur Herstellung von Filmen.

## Claims

1. Organosiloxanes which comprise at least one group of the general formula 1
-(CH₂)ₚ-(O)_{q}-C₆H₄-Z-(COO)ₛ-[A-M]ₜ-E-(CH₂-CH₂-O)ₐ-VN (1)
and, if desired, a group of the general formula 2
-(CH₂)ₘ(O)ₙ-(A)ₜ-Q-X (2)
where
X is a cholesteryl, dihydrocholesteryl, doristeryl, isosorbidyl, isomannidyl or cholic acid radical or an unsubstituted or substituted radical selected from 1,4-phenyl, 4,4'-biphenylyl, 1,4-cyclohexylene, 4,4'-bicyclohexylene, 4,4'-cyclohexylenephenylene, 2,5-substituted 1,3-dioxanyl and pyrimidinyl radical, where the substituent can be a C₁- to C₅-alkoxy radical, C₁-to C₅-alkyl radical, cyano radical, chloro radical or nitro radical,
Q is a -COO- group or a -OOC- group or a -O- group or a chemical bond or a -O-(C=O)-O- group,
Z is a chemical bond or a group -CH₂- or -CH₂-CH₂-,
A is a 1,4-phenylene, 1,5-naphthylene, 2,6-naphthylene, 2,7-naphthylene, 4,4'-biphenylene, 1,4-cyclohexylene, 4,4'-bicyclohexylene, 4,4'-cyclohexylenephenylene, 2,5-(1,3-dioxanylene) or a pyrimidinylene radical,
M is a chemical bond, an oxygen atom or a group -COO-, -OCO- or -OOC-(CH₂)ᵥ-COOCH₂CH₂-,
VN is a group -O-C(O)-CH=CH₂, -O-C(O)-C(CH₃)=CH₂, -(CH₂)ᵤ-O-CH=CH₂, -CH=CH₂ or an oxiranyl group,
E is a group (CH₂)ᵣ, where individual CH₂ groups can be replaced by oxygen,
m and p are each integers from 3 to 6,
r is an integer from 1 to 10,
n, q and s are each 0 or 1,
t is an integer from 1 to 3,
u and v are each an integer from 2 to 8, and
a is 0 or an integer from 1 to 6, with the proviso that in the groups of the general formulae 1 and 2 no oxygen atoms are attached directly to one another.

2. Organosiloxanes according to Claim 1 which are composed of units of the general formula 3
[R_{b}Mes_{c}SiO_{(4-b-c)/2}] (3)
in which
R are C₁- to C₄-alkyl radicals,
Mes is a group of the general formula 1 or 2,
b is 0, 1 or 2, and
c is 0 or 1.

3. Process for preparing the liquid-crystalline organosiloxanes according to Claim 1 or 2, in which organosiloxanes composed of units of the general formula 6
[R_{b}H_{c}SiO_{(4-b-c)/2}] (6)
in which R, b and c are as defined in claim 3 for the general formula 3
are reacted with a mixture of compounds of the general formulae 4 and, if desired, 7
H₂C=CH-(CH₂)ₚ₋₂-(O)_{q}-C₆H₄-Z-(COO)ₛ-[A-M]ₜ-E-(CH₂-CH₂-O)ₐ-VN (4)
H₂C=CH-(CH₂)ₘ₋₂-(O)ₙ-(A)ₜ-Q-X (7)
in which
Z, A, E, M, VN, Q, m, n, p, q, s, t and a are as defined for the general formulae 1 and 2, with the proviso that in the compounds of the general formulae 4 and 7 no oxygen atoms are attached directly to one another.

4. Process for crosslinking the organosiloxane according to Claim 1 or 2, in which the organosiloxanes are three-dimensionally crosslinked by means of free radicals.

5. Process according to Claim 4, in which the organosiloxanes according to Claim 1 or 2 are crosslinked in a mixture with crosslinkers of the general formula 5
VN-(CH₂)ᵣ-(O-CH₂-CH₂)ₐ-[M-A]ₜ-M-(CH₂-CH₂-O)ₐ-(CH₂)ᵣ-VN (5)
in which
VN, a, r, A, t and M are as defined in Claim 1 for the general formulae 1 and 2, on their own or in a mixture with compounds of the general formula 4 as set forth in Claim 3 and/or nonmesogenic bisacrylates and/or bismethacrylates.

6. Crosslinked liquid-crystalline organosiloxanes obtainable by the process according to Claim 4 or 5.

7. Compounds of the general formula 4
H₂C=CH-(CH₂)ₚ₋₂-(O)_{q}-C₆H₄-Z-(COO)ₛ-[A-M]ₜ-E-(CH₂-CH₂-O)ₐ-VN (4)
in which
Z, A, E, M, VN, p, q, s, t and a are as defined in Claim 1 for the general formula 1, with the proviso that in the compounds of the general formula 4 no oxygen atoms are attached directly to one another.

8. Use of the crosslinked liquid-crystalline organosiloxanes according to Claim 6 as pigments.

9. Use of the crosslinked liquid-crystalline organosiloxanes according to Claim 1 or 2 for preparing films.

## Revendications

1. Organosiloxanes comportant au moins un groupe de formule générale 1
-(CH₂)ₚ-(O)_{q}-C₆H₄-Z-(COO)ₛ-[A-M]ₜ-E-(CH₂-CH₂-O)ₐ- VN (1)
et éventuellement un groupe de formule générale 2
-(CH₂)ₘ-(O)ₙ-(A)ₜ-Q-X (2)
formules dans lesquelles
X représente un radical cholestéryle, dihydrocholestéryle, doristéryle, isosorbidyle, isomannidyle ou cholyle, ou un radical substitué ou non substitué qui est choisi parmi les radicaux 1,4-phényle, 4,4'-biphénylyle, 1,4-cyclohexylène, 4,4'-bicyclohexylène, 4,4'-cyclohexylènephénylène, les radicaux 1,3-dioxannyle et pyrimidinyle 2,5-substitués, le substituant pouvant être un radical alcoxy en C₁-C₅, alkyle en C₁-C₅, cyano, nitro ou un atome de chlore,
Q représente un groupe -COO- ou -OOC- ou -O-, ou une liaison chimique ou un groupe -O-(C=O)-O-,
Z représente une liaison chimique ou un groupe -CH₂- ou -CH₂-CH₂-,
A représente un radical 1,4-phénylène, 1,5-naphtylène, 2,6-naphtylène, 2,7-naphtylène, 4,4'-biphénylène, 1,4-cyclohexylène, 4,4'-bicyclohexylène, 4,4'-cyclohexylènephénylène, 2,5-(1,3-dioxannylène) ou un radical pyrimidinylène,
M représente une liaison chimique, un atome d'oxygène ou un groupe -COO-, -OCO- ou - OOC-(CH₂)ᵥ-COOCH₂CH₂-,
VN représente un groupe -O-C(O)-CH=CH₂, -O-C(O)-C(CH₃)=CH₂, -(CH₂)ᵤ-OCH=CH₂, -CH=CH₂ ou un groupe oxirannyle,
E représente un groupe (CH₂)ᵣ, des groupes CH₂ individuels pouvant être remplacés par des atomes d'oxygène,
m et p sont chacun un nombre entier allant de 3 à 6,
r est un nombre entier allant de 1 à 10,
n, q et s ont chacun la valeur 0 ou 1,
t a la valeur 0 ou est un nombre entier allant de 1 à 3,
u et v représentent chacun un nombre entier allant de 2 à 8, et
a a la valeur 0 ou est un nombre entier allant de 1 à 6,
étant entendu que dans les groupes de formules générales 1 et 2, aucun atome d'oxygène n'est directement lié à un autre.

2. Organosiloxanes selon la revendication 1, qui sont constitués de motifs de formule générale 3
[R_{b}Mes_{c}SiO_{(4-b-c)}/2] (3)
dans laquelle
R représente des radicaux alkyle en C₁-C₄,
Mes représente un groupe de formule générale 1 ou 2,
b à la valeur 0, 1 ou 2, et
c à la valeur 0 ou 1.

3. Procédé pour la préparation des organosiloxanes de type cristal liquide selon la revendication 1 ou 2, dans lequel on fait réagir des organosiloxanes constitués de motifs de formule générale 6
[R_{b}H_{c}SiO_{(4-b-c)/2}] (6)
dans laquelle R, b et c ont les significations indiquées pour la formule générale 3 selon la revendication 3, avec un mélange de composés de formules générales 4 et éventuellement 7
H₂C=CH-(CH₂)ₚ₋₂-(O)_{q}-C₆H₄-Z-(COO)ₛ-[A-M]ₜ-E-(CH₂- CH₂-O)ₐ-VN (4)
H₂C=CH-(CH₂)ₘ₋₂-(O)ₙ-(A)ₜ-Q-X (7)
dans lesquelles
Z, A, E, M, VN, Q, m, n, p, q, s, t et a ont les significations données pour les formules générales 1 et 2, étant entendu que dans les composés de formules générales 4 et 7, aucun atome d'oxygène n'est directement lié à un autre.

4. Procédé pour la réticulation des organosiloxanes selon la revendication 1 ou 2, dans lequel les organosiloxanes sont réticulés dans les trois dimensions au moyen de radicaux libres.

5. Procédé selon la revendication 4, dans lequel les organosiloxanes selon la revendication 1 ou 2 sont réticulés en mélange avec des agents de réticulation de formule générale 5
VN-(CH₂)ᵣ-(O-CH₂-CH₂)ₐ-[M-A]ₜ-M-(CH₂-CH₂-O)ₐ- (CH₂)ᵣ-VN (5)
dans laquelle
VN, a, r, A, t et M ont les significations données dans les formules générales 1 et 2 selon la revendication 1,
éventuellement en mélange avec des composés de formule générale 4 selon la revendication 3 et/ou des bisacrylates et/ou bisméthacrylates non mésogènes.

6. Organosiloxanes de type cristal liquide réticulés, pouvant être obtenus par le procédé selon la revendication 4 ou 5.

7. Composés de formule générale 4
H₂C=CH-(CH₂)ₚ₋₂-(O)_{q}-C₆H₄-Z-(COO)ₛ-[A-M]ₜ-E-(CH₂- CH₂-O)ₐ-VN (4)
dans laquelle
Z, A, E, M, VN, p, q, s, t et a ont les significations données pour la formule générale 1,
selon la revendication 1, étant entendu que dans les composés de formule générale 4, aucun atome d'oxygène n'est directement lié à un autre.

8. Utilisation d'organosiloxanes de type cristal liquide réticulés, selon la revendication 6, en tant que pigments.

9. Utilisation d'organosiloxanes de type cristal liquide réticulés, selon la revendication 1 ou 2, pour la fabrication de films.
